# EUROPÄISCHE PATENTANMELDUNG

(11) **EP 4 462 132 A1**
(43) Veröffentlichungstag der Anmeldung: **13.11.2024**
(21) Anmeldenummer: 24174952.2
(22) Anmeldetag: 08.05.2024
(51) Int. Cl.: G01P 1/10, E03F 7/12, F16L 55/26, G01P 3/56

(54) **SYSTEM UND VERFAHREN ZUM ÜBERWACHEN EINER GESCHWINDIGKEIT EINER INSPEKTIONSEINHEIT EINES KANALINSPEKTIONS- UND/ODER WARTUNGSSYSTEMS**

(30) Priorität: 09.05.2023 DE 102023112066
(71) Anmelder: iPEK International GmbH, 87477 Sulzberg (DE)
(72) Erfinder: Tozzo, Fabrizio, 87787 Wolfertschwenden (DE); Kumar, Rajeesh, 87437 Kempten (DE); Talha, Muhammad, 87471 Durach (DE)
(74) Vertreter: 2s-ip Schramm Schneider Bertagnoll Patent- und Rechtsanwälte Part mbB

(57) **Zusammenfassung**

Bereitgestellt wird ein Verfahren zum Überwachen einer Geschwindigkeit einer Inspektionseinheit eines Kanalinspektions- und/oder Wartungssystems, die in einem Kanal verfahrbar ist, wobei das Verfahren zumindest umfasst:
- einen ersten Schritt (S1), in dem eine Fahrgeschwindigkeit der Inspektionseinheit detektiert wird,
- einen zweiten Schritt (S2), in dem die detektierte Fahrgeschwindigkeit mit zumindest einer vorbestimmten Fahrgeschwindigkeit verglichen wird, wobei basierend auf dem Ergebnis des Vergleichs einen Geschwindigkeitsindikator erzeugt wird,
- einen dritten Schritt (S3), in dem basierend auf dem erzeugten Geschwindigkeitsindikator ein farbiges Symbol aus einer Menge von farbigen Symbolen ausgewählt wird, und
- einen vierten Schritt (S3), in dem das ausgewählte farbige Symbol an einer Anzeigeeinrichtung angezeigt wird,
wobei der Geschwindigkeitsindikator angibt, innerhalb welches Geschwindigkeitsintervalls aus einer Menge von vorbestimmten Geschwindigkeitsintervallen sich die detektierte Fahrgeschwindigkeit befindet.

## Beschreibung

### Gebiet der Erfindung

Die Erfindung betrifft ein System und Verfahren zum Überwachen einer Geschwindigkeit einer Inspektionseinheit eines Kanalinspektions- und/oder Wartungssystems.

### Hintergrund der Erfindung

In Kanalinspektions- und/oder Wartungssystemen werden Bildaufnahmeeinrichtungen (Kameras bzw. Videokameras) verwendet, um das Innere eines Rohres oder eines Kanals aufzunehmen. Beim Durchführen von Inspektionen, insbesondere optische Inspektionen eines Kanals, müssen in der Regel bestimmte Vorgaben bzw. Bedingungen eingehalten. So können beispielsweise behördliche Vorgaben vorsehen, dass bei einer Bestands- und Zustandserfassung von Abwasseranlagen bestimmte Geschwindigkeiten bei einer optischen Inspektion nicht überschritten werden dürfen.

Im Stand der Technik ist es üblich, die aktuelle Fahrgeschwindigkeit, beispielsweise eines Fahrwagens in einem Kanal an einer Anzeigeeinrichtung anzuzeigen, etwa als Meter pro Sekunde. Der Bediener eines Inspektionssystems kann damit die aktuelle Fahrgeschwindigkeit sehen. Allerdings muss der Bediener die angezeigte Fahrgeschwindigkeit ständig im Auge behalten, um ein Überschreiten der maximalen Geschwindigkeit zu vermeiden. Zudem muss der Bediener wissen, welche Maximalgeschwindigkeit aktuell gilt. Denn die für eine Inspektion gültige Maximalgeschwindigkeit kann einerseits von der verwendeten Inspektionseinheit, andererseits von der Art der durchgeführten Inspektion abhängen. Beispielsweise kann für eine Videoinspektion eine maximale Geschwindigkeit von 15 cm/s zulässig sein, während für eine Ultraschallinspektion lediglich eine maximale Geschwindigkeit von 10 cm/s zulässig ist. Bei Videoinspektionen kann die zulässige maximale Geschwindigkeit etwa davon abhängig sein, wie hoch die Auflösung der verwendeten Kamera oder wie hoch die verwendete Bildwiederholrate ist.

### Aufgabe der Erfindung

Aufgabe der Erfindung ist es daher, Lösungen bereitzustellen, die ein einfacheres und sichereres Überwachen von Fahrgeschwindigkeiten von Inspektionseinheiten (etwa ein Fahrwagen) eines Kanalinspektions- und/oder Wartungssystems ermöglichen.

### Erfindungsgemäße Lösung

Gelöst wird diese Aufgabe mit einem Verfahren und einem System nach den unabhängigen Ansprüchen. Vorteilhafte Ausgestaltung sind in den jeweiligen abhängigen Ansprüchen angegeben.

Bereit gestellt wird demnach ein Verfahren zum Überwachen einer Geschwindigkeit einer Inspektionseinheit eines Kanalinspektions- und/oder Wartungssystems, die in einem Kanal verfahrbar ist, wobei das Verfahren zumindest umfasst:
- einen ersten Schritt S1, in dem eine Fahrgeschwindigkeit der Inspektionseinheit detektiert wird,
- einen zweiten Schritt S2, in dem die detektierte Fahrgeschwindigkeit mit zumindest einer vorbestimmten Fahrgeschwindigkeit verglichen wird, wobei basierend auf dem Ergebnis des Vergleichs einen Geschwindigkeitsindikator erzeugt wird,
- einen dritten Schritt S3, in dem basierend auf dem erzeugten Geschwindigkeitsindikator ein farbiges Symbol aus einer Menge von farbigen Symbolen ausgewählt wird, und
- einen vierten Schritt S3, in dem das ausgewählte farbige Symbol an einer Anzeigeeinrichtung angezeigt wird,
wobei der Geschwindigkeitsindikator angibt, innerhalb welches Geschwindigkeitsintervalls aus einer Menge von vorbestimmten Geschwindigkeitsintervallen sich die detektierte Fahrgeschwindigkeit befindet.

Vorteilhaft hierbei ist, dass der Bediener keinerlei konkrete Geschwindigkeitswerte mehr im Auge behalten muss. Anhand des farbigen Symbols, das an der Anzeigeeinrichtung angezeigt wird, kann der Bediener auf einen Blick erkennen, ob sich die aktuelle Fahrgeschwindigkeit in einem zulässigen Geschwindigkeitsbereich liegt, d.h. ob die aktuelle Fahrgeschwindigkeit unterhalb oder oberhalb einer bestimmten Maximalgeschwindigkeit liegt.

Die zumindest eine vorbestimmte Fahrgeschwindigkeit kann ein Intervall aus der Menge von vorbestimmten Geschwindigkeitsintervallen sein, wobei in dem zweiten Schritt verglichen wird, in welchem Geschwindigkeitsintervall sich die detektierte Fahrgeschwindigkeit befindet.

So kann auf einfache Weise dem Benutzer an der Anzeigeeinrichtung signalisiert werden, in welchem Geschwindigkeitsintervall sich die aktuelle Fahrgeschwindigkeit befindet. Beispiele für Geschwindigkeitsintervalle sind etwa 0 bis 5 cm/s (normale Geschwindigkeit - Visualisierung durch ein grünes Symbol), 5 cm/s bis 10 cm/s (erhöhte, aber zulässige Geschwindigkeit - Visualisierung durch ein gelbes Symbol), und mehr als 10 cm/s (erhöhte, nicht zulässige Geschwindigkeit - Visualisierung durch ein rotes Symbol).

Die Menge von vorbestimmten Geschwindigkeitsintervallen kann in Abhängigkeit von der verwendeten Inspektionseinheit ermittelt werden, wobei bei dem Wechsel der Inspektionseinheit die Menge von vorbestimmten Geschwindigkeitsintervallen für diese Inspektionseinheit neu ermittelt werden. Damit ist gemeint, dass die Anzahl der Geschwindigkeitsintervalle und die Grenzen jedes Intervalls in Abhängigkeit von der verwendeten Inspektionseinheit ermittelt werden. So kann beispielsweise für eine erste Inspektionseinheit ein erstes Geschwindigkeitsintervall die Intervallgrenzen 0 cm/s und 5 cm/s aufweisen, und für eine erste Inspektionseinheit die Intervallgrenzen 0 cm/s und 10 cm/s aufweisen. In einer Verarbeitungseinrichtung eines Kanalinspektions- und/oder Wartungssystems können die Intervalle und Intervallgrenzen für verschiedene Inspektionseinheiten und für verschiedene Arten von Inspektionen gespeichert sein. Der Verarbeitungseinrichtung wird dann bekannt gemacht, welche Inspektionseinheit verwendet wird bzw. welche Art von Inspektion durchgeführt wird. Die Verarbeitungseinrichtung kann dann selbstständig die jeweiligen Intervalle ermitteln und basierend auf den ermittelten Intervallen den Geschwindigkeitsindikator für die detektierte Fahrgeschwindigkeit ermitteln.

In einer Ausgestaltung der Erfindung kann der Geschwindigkeitsindikator zumindest einen ersten Wert und einen zweiten Wert annehmen kann, wobei
- der erste Wert indikativ dafür ist, dass die detektierte Fahrgeschwindigkeit eine vorbestimmte maximale Fahrgeschwindigkeit nicht überschreitet, und
- der zweite Wert indikativ dafür ist, dass die detektierte Fahrgeschwindigkeit die vorbestimmte maximale Fahrgeschwindigkeit überschreitet.

Vorteilhaft ist es, wenn die Fahrgeschwindigkeit der Inspektionseinheit fortlaufend detektiert wird, wobei der zweite Schritt, der dritte Schritt und der vierte Schritt basierend auf der fortlaufend detektierten Fahrgeschwindigkeit fortlaufend ausgeführt werden, um das an der Anzeigeeinrichtung angezeigte farbige Symbol bei einer Änderung des Geschwindigkeitsindikators zu aktualisieren.

In einer vorteilhaften Ausgestaltung der Erfindung kann es vorgesehen sein, wenn die Anzeigeeinrichtung über eine Vibrationseinrichtung verfügt, wobei bei einer Annäherung der Fahrgeschwindigkeit an die Maximalgeschwindigkeit oder bei Überschreiten der Maximalgeschwindigkeit die Vibrationseinrichtung aktiviert wird, um dem Bediener der Anzeigeeinrichtung ein haptisches Feedback zu geben.

Bereit gestellt wird durch die Erfindung ferner ein Kanalinspektions- und/oder Wartungssystems, das zumindest umfasst:
- eine Inspektionseinheit, die in einem Kanal verfahrbar ist, wobei die Inspektionseinheit eine Geschwindigkeitsmesseinrichtung aufweist, die angepasst ist, eine Fahrgeschwindigkeit der Inspektionseinheit zu detektieren,
- eine Verarbeitungseinrichtung, die mit der Geschwindigkeitsmesseinrichtung gekoppelt ist und die angepasst ist, die von der Geschwindigkeitsmesseinrichtung detektierte Fahrgeschwindigkeit mit zumindest einer vorbestimmten Fahrgeschwindigkeit zu vergleichen, und basierend auf dem Ergebnis des Vergleichs einen Geschwindigkeitsindikator zu erzeugen,
- eine Anzeigeeinrichtung, die mit der Verarbeitungseinrichtung gekoppelt ist und die angepasst ist,
   - den von der Verarbeitungseinrichtung erzeugten Geschwindigkeitsindikator entgegenzunehmen,
   - basierend auf dem entgegengenommenen Geschwindigkeitsindikator ein farbiges Symbol aus einer Menge von farbigen Symbolen auszuwählen, und
   - das ausgewählte farbige Symbol an der Anzeigeeinrichtung anzuzeigen.

### Kurzbeschreibung der Figuren

Weitere Einzelheiten und Merkmale der Erfindung, sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein Blockschaltbild eins erfindungsgemäßen Systems; und
- Fig. 2: ein Beispiel einer Anzeigeeinrichtung zum erfindungsgemäßen Überwachen einer Geschwindigkeit einer Inspektionseinheit.

### Detaillierte Beschreibung der Erfindung

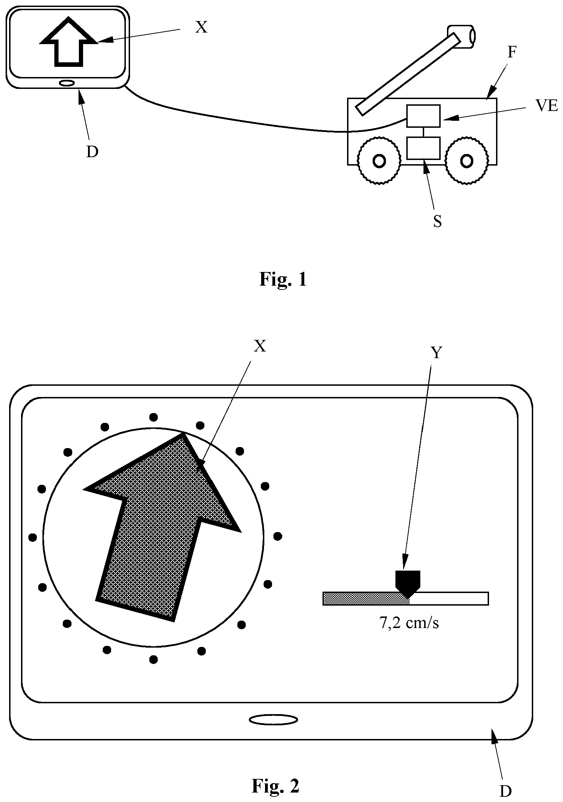

**Fig. 1** zeigt ein Blockschaltbild eins erfindungsgemäßen Systems. Die Inspektionseinheit umfasst einen Fahrwagen F, an dem eine Inspektionskamera angeordnet ist. Der Fahrwagen F weist eine Geschwindigkeitsmesseinrichtung S auf, die mit einer Verarbeitungseinrichtung VE gekoppelt ist. Die Geschwindigkeitsmesseinrichtung ist angepasst die Fahrgeschwindigkeit des Fahrwagens F in einem Kanal zu detektieren. Hierfür können an sich bekannte Sensoren zur Geschwindigkeitsmessung verwendet werden.

Die von der Geschwindigkeitsmesseinrichtung S detektierte Geschwindigkeit wird an die Verarbeitungseinrichtung VE übergeben, die basierend auf der detektierten Geschwindigkeit einen Geschwindigkeitsindikator ermittelt.

Die Verarbeitungseinrichtung VE ist mit einer Anzeigeeinrichtung D gekoppelt. Diese Kopplung kann drahtlos oder drahtgebunden sein.

Der von der Verarbeitungseinrichtung VE ermittelte Geschwindigkeitsindikator wird an die Anzeigeeinrichtung übertragen. Die Anzeigeeinrichtung wählt basierend auf dem entgegengenommenen Geschwindigkeitsindikator ein farbiges Symbol X aus einer Menge von farbigen Symbolen aus und bringt das ausgewählte farbige Symbol zur Anzeige. Das farbige Symbol ist von dem Bediener besonders einfach zu erfassen. Insbesondere kann der Bediener sofort erkennen, ob sich die Geschwindigkeit des Fahrwagens in einem zulässigen Bereich befindet, oder ob die Geschwindigkeit des Fahrwagens eine vorbestimme Maximalgeschwindigkeit überschreitet oder zu überschreiten droht. Der aktuelle Geschwindigkeitswert wird hierfür nicht benötigt.

Ermitteln des Geschwindigkeitsindikators:
Basierend auf der detektierten Geschwindigkeit ermittelt die Verarbeitungseinrichtung VE einen Geschwindigkeitsindikator. Hierzu vergleicht die Verarbeitungseinrichtung die detektierte Geschwindigkeit mit einer vorbestimmten Fahrgeschwindigkeit bzw. mit vorbestimmten Intervallen von Fahrgeschwindigkeiten und prüft, in welches Intervall die detektierte Geschwindigkeit fällt. Jedem Intervall ist ein Geschwindigkeitsindikator zugeordnet, sodass als Geschwindigkeitsindikator jener Geschwindigkeitsindikator ausgewählt wird, der dem Intervall zugeordnet ist, in das die aktuelle Geschwindigkeit fällt. Die verschiedenen Intervalle von Fahrgeschwindigkeiten können ein der Verarbeitungseinrichtung gespeichert sein.

### Beispiel:

Es können drei Intervalle vorgesehen sein, denen jeweils ein Geschwindigkeitsindikator zugeordnet ist:

| | | |
|---|---|---|
| Intervall 1: | 0 cm/s bis 5 cm/s | → Indikator 1 |
| Intervall 2: | 5 cm/s bis 10 cm/s | → Indikator 2 |
| Intervall 3: | > 10 cm/s | → Indikator 3 |

Bei einer detektierten Fahrgeschwindigkeit von 7,5 cm/s wird das Intervall 2 ermittelt, dem der Geschwindigkeitsindikator 2 zugeordnet ist.

Der Geschwindigkeitsindikator kann ein einfacher numerischer Wert sein, der es der Anzeigeeinrichtung ermöglicht ein farbiges Symbol aus einer Menge von farbigen Symbolen auszuwählen.

Wie vorstehend erläutert können die Intervalle von Fahrgeschwindigkeiten in der Verarbeitungseinrichtung VE gespeichert sein.

Erfindungsgemäß ist es möglich, dass für verschiedene Inspektionseinheiten bzw. für verschiedene Arten von Inspektionen verschiedene Intervalle vorgesehen sind, die ebenfalls in der Verarbeitungseinrichtung gespeichert sein können. Beispielsweise können für zwei verschiedene Kamerasysteme verschiedene Intervalle vorgesehen sein, wie sich nachfolgender Tabelle ergibt.

| | Kamerasystem 1 | Kamerasystem 2 |
|---|---|---|
| Intervall 1 | 0 cm/s bis 5 cm/s | 0 cm/s bis 7 cm/s |
| Intervall 2 | 5 cm/s bis 10 cm/s | 7 cm/s bis 15 cm/s |
| Intervall 3 | > 10 cm/s | > 15 cm/s |

Sofern das Intervall 3 unzulässige Fahrgeschwindigkeiten angibt, würde der entsprechende Geschwindigkeitsindikator für das Kamerasystem 1 bereits ab einer Geschwindigkeit von 10 cm/s die Anzeigeeinrichtung veranlassen ein rotes Symbol anzuzeigen, während für das Kamerasystem 2 erst ab einer Geschwindigkeit von 15 cm/s ein rotes Symbol angezeigt würde.

Vorteilhaft ist es, wenn der Verarbeitungseinrichtung mitgeteilt wird, welche Inspektionseinheit verwendet wird bzw. welche Art von Inspektion durchgeführt wird. Anhand dieser Information kann die Verarbeitungseinrichtung die jeweils dazugehörenden Intervalle auswählen und für das Ermitteln der Geschwindigkeitsindikatoren heranziehen. In einer Ausgestaltung kann es vorgesehen sein, dass die Inspektionseinheit selbst die hierfür nötigen Informationen der Verarbeitungseinrichtung bereitstellt.

**Fig. 2** zeigt ein Beispiel einer Anzeigeeinrichtung zum erfindungsgemäßen Überwachen einer Geschwindigkeit einer Inspektionseinheit.

Die Anzeigeeinrichtung D ist hier als Tablet ausgestaltet. Als farbiges Symbol X, das zur Visualisierung des Geschwindigkeitsindikators verwendet wird, ist hier ein Pfeil gezeigt. Es können aber auch andere Symbole verwendet werden. Die Farbe des Pfeils gibt an, um welchen Geschwindigkeitsindikator es sich handelt. So kann ein grüner Pfeil angeben, dass die Fahrgeschwindigkeit innerhalb zulässiger Grenzen liegt. Ein roter Pfeil kann hingegen anzeigen, dass die Fahrgeschwindigkeit oberhalb einer zulässigen Maximalgeschwindigkeit liegt.

Die Neigung des Pfeils kann symbolisieren in welche Richtung sich der Fahrwagen bewegt.

Optional kann auch die aktuelle Geschwindigkeit (Mittels des Symbols Y) angezeigt werden.

Erfindungsgemäß wichtig ist aber, dass der ein farbiges Symbol angezeigt wird, das einen Geschwindigkeitsindikator repräsentiert, sodass der Bediener des Systems besonders schnell erfassen kann, ob sich Fahrgeschwindigkeit des Fahrwagens innerhalb zulässiger Grenzwerte befindet oder nicht. Der Bediener kann sich so besser auf die eigentliche Inspektion konzentrieren und muss nicht ständig die aktuellen Geschwindigkeitswerte im Auge behalten.

Zur noch besseren Unterstützung kann die Anzeigeeinheit eine Vibrationseinrichtung aufweisen, die aktiviert wird, sobald sich die Fahrgeschwindigkeit der Maximalgeschwindigkeit annähert oder diese überschreitet. Während einer Annäherung an die Maximalgeschwindigkeit kann die Intensität der Vibration zunehmen. Damit muss der Bediener das Symbol X jedenfalls spätestens dann beachten, sobald er mittels Vibration darauf aufmerksam gemacht wird.

## Patentansprüche

1. Verfahren zum Überwachen einer Geschwindigkeit einer Inspektionseinheit eines Kanalinspektions- und/oder Wartungssystems, die in einem Kanal verfahrbar ist, wobei das Verfahren zumindest umfasst:
- einen ersten Schritt (S1), in dem eine Fahrgeschwindigkeit der Inspektionseinheit detektiert wird,
- einen zweiten Schritt (S2), in dem die detektierte Fahrgeschwindigkeit mit zumindest einer vorbestimmten Fahrgeschwindigkeit verglichen wird, wobei basierend auf dem Ergebnis des Vergleichs einen Geschwindigkeitsindikator erzeugt wird,
- einen dritten Schritt (S3), in dem basierend auf dem erzeugten Geschwindigkeitsindikator ein farbiges Symbol aus einer Menge von farbigen Symbolen ausgewählt wird, und
- einen vierten Schritt (S3), in dem das ausgewählte farbige Symbol an einer Anzeigeeinrichtung angezeigt wird,
wobei der Geschwindigkeitsindikator angibt, innerhalb welches Geschwindigkeitsintervalls aus einer Menge von vorbestimmten Geschwindigkeitsintervallen sich die detektierte Fahrgeschwindigkeit befindet.

2. Verfahren nach Anspruch 1, wobei die zumindest eine vorbestimmte Fahrgeschwindigkeit ein Intervall aus der Menge von vorbestimmten Geschwindigkeitsintervallen ist, wobei in dem zweiten Schritt verglichen wird, in welchem Geschwindigkeitsintervall sich die detektierte Fahrgeschwindigkeit befindet.

3. Verfahren nach Anspruch 2, wobei die Menge von vorbestimmten Geschwindigkeitsintervallen in Abhängigkeit von der verwendeten Inspektionseinheit ermittelt werden, wobei bei dem Wechsel der Inspektionseinheit die Menge von vorbestimmten Geschwindigkeitsintervallen für diese Inspektionseinheit neu ermittelt werden.

4. Verfahren nach Anspruch 1, wobei der Geschwindigkeitsindikator zumindest einen ersten Wert und einen zweiten Wert annehmen kann, wobei
- der erste Wert indikativ dafür ist, dass die detektierte Fahrgeschwindigkeit eine vorbestimmte maximale Fahrgeschwindigkeit nicht überschreitet, und
- der zweite Wert indikativ dafür ist, dass die detektierte Fahrgeschwindigkeit die vorbestimmte maximale Fahrgeschwindigkeit überschreitet.

5. Verfahren nach Anspruch 1, wobei die Fahrgeschwindigkeit der Inspektionseinheit fortlaufend detektiert wird und wobei der zweite Schritt, der dritte Schritt und der vierte Schritt basierend auf der fortlaufend detektierten Fahrgeschwindigkeit fortlaufend ausgeführt werden, um das an der Anzeigeeinrichtung angezeigte farbige Symbol bei einer Änderung des Geschwindigkeitsindikators zu aktualisieren.

6. Kanalinspektions- und/oder Wartungssystems, das zumindest umfasst:
- eine Inspektionseinheit (F), die in einem Kanal verfahrbar ist, wobei die Inspektionseinheit eine Geschwindigkeitsmesseinrichtung (S) aufweist, die angepasst ist, eine Fahrgeschwindigkeit der Inspektionseinheit zu detektieren,
- eine Verarbeitungseinrichtung (VE), die mit der Geschwindigkeitsmesseinrichtung gekoppelt ist und die angepasst ist, die von der Geschwindigkeitsmesseinrichtung detektierte Fahrgeschwindigkeit mit zumindest einer vorbestimmten Fahrgeschwindigkeit zu vergleichen, und basierend auf dem Ergebnis des Vergleichs einen Geschwindigkeitsindikator zu erzeugen,
- eine Anzeigeeinrichtung (D), die mit der Verarbeitungseinrichtung gekoppelt ist und die angepasst ist,
- den von der Verarbeitungseinrichtung erzeugten Geschwindigkeitsindikator entgegenzunehmen,
- basierend auf dem entgegengenommenen Geschwindigkeitsindikator ein farbiges Symbol (X) aus einer Menge von farbigen Symbolen auszuwählen, und
- das ausgewählte farbige Symbol (X) an der Anzeigeeinrichtung anzuzeigen.
